# EUROPÄISCHE PATENTSCHRIFT

(11) **EP 0 504 697 B1**
(45) Veröffentlichungstag und Bekanntmachung des Hinweises auf die Patenterteilung: **22.01.1997**
(21) Anmeldenummer: 92103972.3
(22) Anmeldetag: 09.03.1992
(51) Int. Cl.: G01N 35/10, B01L 3/00, B65D 51/00

(54) **Verschluss für Reagenzbehälter**
Reagent container closure
Fermeture pour récipients à réactifs

(30) Priorität: 19.03.1991 CH 823/91
(43) Veröffentlichungstag der Anmeldung: 23.09.1992
(73) Patentinhaber: F. HOFFMANN-LA ROCHE AG, 4002 Basel (CH)
(72) Erfinder: Bucheli, Rudolf, CH-6331 Hünenberg (CH)
(74) Vertreter: Ventocilla, Abraham

(56) Entgegenhaltungen:
- EP-A- 0 192 968
- WO-A-83/01912
- WO-A-90/06267
- WO-A-90/09330
- FR-A- 2 529 531
- US-A- 3 930 413

## Beschreibung

Die Erfindung betrifft einen Verschluss für einen Reagenzbehälter, der in einem Analysensystem verwendbar ist, das eine automatische Pipettiervorrichtung enthält, bei der zur Uebertragung von kleinen Reagenzmengen vom Reagenzbehälter zu Reaktionsküvetten eine Pipettiernadel verwendet wird, welcher Verschluss ein aus einem Kunststoff in einem Stück geformten Teil ist und folgende Teile aufweist:
eine äussere zylindrische Seitenwand, die eine Innenfläche, eine Aussenfläche und eine Symmetrieachse hat, die parallel zur Seitenwand verläuft, und
eine ringförmige, an der Seitenwand angrenzende obere Wand, die und die eine kreisförmige Oeffnung aufweist, wobei der Verschluss eine innere kegelförmige Wand enthält, die sich vom inneren Kreis der oberen Wand nach innen erstreckt und in einer auf der Symmetrieachse der zylindrischen Seitenwand liegenden Spitze endet.

Die Erfindung betrifft ferner eine Verschliessvorrichtung, die einen Verschluss der oben erwähnten Art enthält.

Bei bisher bekannten Analysensystemen, z.B. im Gebiet der klinischen chemischen Analyse von biologischen Proben, werden offene Reagenzbehälter verwendet. Daraus wird jeweils mittels einer automatischen Pipettiervorrichtung eine kleine Menge eines flüssigen Reagenz entnommen und einer Reaktionsküvette zugeführt. Für jeden Pipettiervorgang führt ein elektromechanisch angetriebener Arm die Pipettiernadel der Pipettiervorrichtung zu einem Reagenzbehälter, führt ihn dort in den Reagenzbehälter zur Entnahme eines Reagenzvolumens ein, nimmt die Pipettiernadel danach aus dem Reagenzbehälter heraus und führt sie zu dem Reaktionsgefäss, zu dem das Reagenzvolumen zugeführt werden soll. Der Inhalt eines üblichen Reagenzbehälters reicht

für eine relativ grosse Zahl (in der Grössenordnung von 20 bis 2000) solcher Pipettiervorgänge aus.

Die Benutzung offener Reagenzbehälter hat folgende Nachteile:
- Das Laborpersonal muss jeden neuen Reagenzbehälter aus seiner Verpackung entnehmen, seinen Verschluss entfernen und den offenen Reagenzbehälter im Analysensystem anstelle eines leeren Reagenzbehälters einsetzen. In einem und demselben Analysensystem werden ausserdem oft viele verschiedene Reagenzien zu verschiedenen Zeitpunkten benötigt. Die Benutzung offener Reagenzbehälter erfordert daher vom Laborpersonal einen erheblichen Arbeitsaufwand.
- Bei Benutzung offener Reagenzbehälter in Räumen mit relativ trockener Luft geht ein Teil der Reagenzlösung durch Verdunstung verloren und dadurch tritt mit der Zeit eine Erhöhung der Reagenzkonzentration ein. Bei Benutzung offener Reagenzbehälter in Räumen mit relativ feuchter Luft oder durch Kondenswasserbildung bei Verwendung gekühlter Reagenzien nimmt hingegen das Volumen der Reagenzlösung zu und dadurch tritt mit der Zeit eine Verringerung der Reagenzkonzentration ein. Bei Benutzung offener Reagenzbehälter findet ausserdem ein Gasaustausch mit der Umgebungsluft statt, der eine Alterung bzw. Aenderung des Reagenz verursacht. Alle soeben erwähnten Aenderungen des Reagenz und insbesondere der Reagenzkonzentration verursachen eine Verringerung der Genauigkeit der durchgeführten Analysen. Um dies wenigstens teilweise zu vermeiden, wurden bisher relativ aufwendige Verpackungen des ganzen Reagenzbehälters verwendet.

Einen Verschluss der eingangs angegebenen Art ist aus der WO-A- 90/09330 bekannt. Der mittlere Teil dieses bekannten Verschlusses weist eine kegelförmige Wand auf, dessen Spitze radial verlaufende Schlitze hat, die Kreissektoren definieren, welche bei der Einführung eines Pipettierrohrs durch die Spitze der kegelförmigen Wand voneinander getrennt werden und ein Durchgang für einen Pipettierrohr bilden. Durch das Vorhandensein der oben erwähnten Schlitze ist mit Reagenzverluste durch Verdunstung zu rechnen, die mit der Zeit eine Erhöhung der Reagenzkonzentration verursachen. Die Form des Verschlusses gemäss der WO 90/09330 ist ausserdem nicht dazu geeignet, eine Führung des Pipettierrohrs auch dann sicherzustellen, wenn dieser leicht gekrümmt ist, so dass seine Spitze bei dessen Einführung durch den Verschluss etwas ausserhalb der Symmetrieachse der zylindrischen Seitenwand des Verschlusses liegt. Mit einer leichten Krümmung des Pipettierrohrs ist aber in der Praxis zu rechnen.

Der Erfindung liegt daher die Aufgabe zugrunde, einen Verschluss der eingangs angegebenen Art zur Verfügung zu stellen, mit dem die oben erwähnten Nachteile behoben werden können.

Erfindungsgemäss wird diese Aufgabe mit einem Verschluss der eingangs angegebenen Art gelöst, welches dadurch gekennzeichnet ist, dass die Spitze eine geschlossenen Spitze ist, die durchstechbar ist, und dass die innere kegelförmige Wand (15) eine Aussenfläche und eine Innenfläche hat, und dass die Innenfläche von der Seitenwand beabstandet und an der obere Wand angrenzt,
wobei die Innenfläche der inneren kegelförmigen Wand einen ersten, an der oberen Wand angrenzenden Teil hat, der mit der Symmetrieachse der zylindrischen Seitenwand einen ersten Winkel bildet, und einen zweiten Teil hat, der die Spitze der kegelförmigen Wand bildet, und der mit der Symmetrieachse der zylindrischen Seitenwand einen zweiten Winkel bildet, der grösser als der erste Winkel ist.

Die wesentlichen Vorteile des erfindungsgemässen Verschlusses sind wie folgt:
- Zur Durchführung der Pipettierungen von Reagenz vom Reagenzbehälter zu den Reaktionsküvetten kann die Pipettiernadel durch den Verschluss in den Reagenzbehälter eingeführt werden. Für die Benutzung des Reagenzbehälters im Analysensystem ist es daher nicht erforderlich, den Verschluss zu entfernen.
- Bei jedem Pipettiervorgang führt die kegelförmige, sich nach innen erstreckende Wand im mittleren Teil des Verschlusses die Pipettiernadel jeweils durch dieselbe Stelle des Verschlusses, nämlich durch einen kleinen Schlitz an der durchgestochenen Spitze der kegelförmigen Wand. Es wird auf diese Weise sichergestellt, dass auch bei einer grossen Zahl von Pipettiervorgängen (z.B. 200 bis 1000) durch denselben Verschluss keine Beschädigung des Verschlusses und keine dadurch verursachte Verstopfung der Pipettiernadel (durch Fragmente des Verschlusses) eintreten kann.
- Wenn man von kleinen Entlüftungsschlitzen absieht, die nur beim Eintauchen der Pipettiernadel offen sind, bleibt der mit dem erfindungsgemässen Verschluss versehenen Reagenzbehälter während seiner ganzen Benutzungsdauer im Analysensystems praktisch geschlossen. Diese Wirkung des erfindungsgemässen Verschlusses wird insbesondere durch seine kegelförmige Wand erzielt, die durch ihre Form und Länge ein Verdunsten der Reagenzlösung, einen Gasaustausch mit der Umgebungsluft und dadurch eine vorzeitige Alterung des Reagenz verhindert. Zudem wird ein ringförmiges, federähnliches Anliegen des Verschlusses beim Durchdringungspunkt der Pipettiernadel erzielt. Dies hat zur Folge, dass beim Eindringen und Herausziehen der Pipettiernadel diese abgestreift wird, was eine Kontamination von verschiedenen Reagenzien grösstenteils verhindert.

Durch die soeben erwähnten Vorteile ermöglicht der erfindungsgemässe Verschluss, die Behandlung des Reagenzbehälters im Analysensystem zu automatisieren, d.h. das Laborpersonal von der bisher dafür erforderlichen manuellen Tätigkeit zu entlasten, und gleichzeitig die Zuverlässigkeit dieser Behandlung zu erhöhen.

Der erfindungsgemässe Verschluss ist vorzugsweise ein Schraubverschluss. Dadurch wird auf einfache Weise eine gute Abdichtung des Reagenzbehälters sichergestellt.

Eine bevorzugte Ausführungsform des erfindungsgemässen Verschlusses ist dadurch gekennzeichnet, dass der erste Winkel zwischen 5° und 30° liegt und der zweite Winkel zwischen 20° und 60° liegt.

Eine besonders bevorzugte Ausführungsform des erfindungsgemässen Verschlusses ist dadurch gekennzeichnet, dass der erste Winkel ca. 10° und der zweite Winkel ca. 30° beträgt. Dadurch erfüllt die kegelförmige Wand des Verschlusses ihre doppelte Funktion als Führungsglied bei der Einführung der Pipettiernadel und als für den dichten Verschluss des Behälters wichtigen Teil des Verschlusses in optimaler Weise.

Eine bevorzugte Ausführungsform des erfindungsgemässen Verschlusses ist ferner dadurch gekennzeichnet, dass die kegelförmige Wand eine glatte Innenfläche hat. Dadurch erfüllt die kegelförmige Wand des Verschlusses ihre Funktion als Führungsglied bei der Einführung der Pipettiernadel in optimaler Weise.

Der Zugang zur kegelförmigen Wand des erfindungsgemässen Verschlusses kann vorzugsweise mit einer metallischen Siegelfolie abgedichtet werden. Dadurch wird mit dem Verschluss ein Abdichtungsgrad erreicht, der ausreichend ist, um die Haltbarkeit von Reagenzien in Form eines Lyophilisats oder Granulats über längere Zeit sicherzustellen.

Eine bevorzugte Ausführungsform des erfindungsgemässen Verschlusses ist dadurch gekennzeichnet, dass er eine an der oberen Wand angrenzende, ringförmige Dichtungslippe hat, die mit der Seitenwand konzentrisch ist, sich nach innen erstreckt und zwischen der Seitenwand und der kegelförmigen Wand liegt. Diese Ausführungsform des Verschlusses hat den Vorteil, dass dabei ein zusätzlicher Dichtungsring zwischen dem Verschluss und dem Behälter nicht erforderlich ist. Diese Ausführungsform ist insbesondere zur Aufbewahrung von Reagenz in flüssiger Form geeignet, weil durch sie ein Abdichtungsgrad erreicht wird, der ausreichend ist, um die Haltbarkeit von Reagenzien in flüssiger Form über längere Zeit sicherzustellen.

Erfindungsgemäss wird die oben erwähnte Aufgabe ausserdem mit einer Verschliessvorrichtung gelöst, welche die folgende Komponenten enthält:
a) einen Verschluss, welcher ein aus einem Kunststoff in einem Stück geformten Teil ist und folgende Teile aufweist: eine äussere zylindrische Seitenwand, die eine Innenfläche, eine Aussenfläche und eine Symmetrieachse hat, die parallel zur Seitenwand verläuft; eine ringförmige, an der Seitenwand angrenzende obere Wand, die und die eine kreisförmige Oeffnung aufweist; und eine innere, an der obere Wand angrenzende und von der Seitenwand beabstandete, kegelförmige Wand, die eine Aussenfläche und eine Innenfläche hat, und die sich vom inneren Kreis der oberen Wand nach innen erstreckt und in einer auf der Symmetrieachse der zylindrischen Seitenwand liegenden, geschlossenen Spitze endet, die durchstechbar ist, wobei der Verschluss ein aus einem Kunststoff in einem Stück geformten Teil ist, wobei die Innenfläche der inneren kegelförmigen Wand einen ersten, an der oberen Wand angrenzenden Teil hat, der mit der Symmetrieachse der zylindrischen Seitenwand einen ersten Winkel bildet, und einen zweiten Teil hat, der die Spitze der kegelförmigen Wand bildet, und der mit der Symmetrieachse der zylindrischen Seitenwand einen zweiten Winkel bildet, der grösser als der erste Winkel ist, und
b) einen Stopfen, der zwischen dem Verschluss und dem Behälter als Abdichtung einsetzbar ist und in der Mitte einen Durchgang hat, dessen Form der Aussenfläche der kegelförmigen Wand des Verschlusses so angepasst ist, dass wenn der Behälter mit dem Stopfen und dem Verschluss verschlossen wird, die Aussenfläche der kegelförmigen Wand sich gegen die Innenwand des Durchgangs des Stopfens abdichtend anlegt.

Da diese Verschliessvorrichtung einen erfindungsgemässen Verschluss enthält, werden mit ihr alle Vorteile erzielt, die oben in bezug auf diesen angegeben sind. Mit dem in der erfindungsgemässen Verschliessvorrichtung vorgesehenen Stopfen wird eine Erhöhung des Abdichtungsgrades erzielt, die vor allem bei Reagenzbehälter von Vorteil ist, die Reagenzien in Form eines Granulats enthalten. Mit Ausnahme der Ausführungsform des erfindungsgemässen Verschlusses, die eine an der oberen Wand angrenzende, ringförmige Dichtungslippe hat, können alle oben erwähnten Ausführungsformen des erfindungsgemässen Verschlusses in der erfindungsgemässen Verschliessvorrichtung verwendet werden.

Ein Ausführungsbeispiel der Efindung wird im folgenden anhand der beiliegenden Zeichnungen beschrieben. Es zeigen:
- Fig. 1: eine Ansicht, teilweise im Querschnitt, einer ersten Ausführungsform eines erfindungsgemässen Verschlusses 11,
- Fig. 2: eine partielle Draufsicht des Verschlusses 11 gemäss Fig. 1,
- Fig. 3: einen Querschnitt eines Stopfens 21, der dazu geeignet ist, zusammen mit dem Verschluss 11 gemäss Fig. 1 eine erfindungsgemässe Verschliessvorrichtung zu bilden,
- Fig. 4: eine Ansicht, teilweise im Querschnitt, einer erfindungsgemässen Verschliessvorrichtung,
- Fig. 5: eine Ansicht, teilweise im Querschnitt, der Verschliessvorrichtung gemäss Fig. 4 und eines darin eingesetzten Dorns 17,
- Fig. 6: eine Ansicht, teilweise im Querschnitt, der Verschliessvorrichtung gemäss Fig. 4 nach Entfernung des in Fig. 5 gezeigten Dorns 17,
- Fig. 7: eine Draufsicht der Verschliessvorrichtung gemäss Fig. 6,
- Fig. 8: eine Ansicht, teilweise im Querschnitt, der Verschliessvorrichtung gemäss Fig. 4 und einer dadurch eingeführten Pipettiernadel 26, und
- Fig. 9: eine Ansicht, teilweise im Querschnitt, einer zweiten Ausführungsform eines erfindungsgemässen Verschlusses 31,

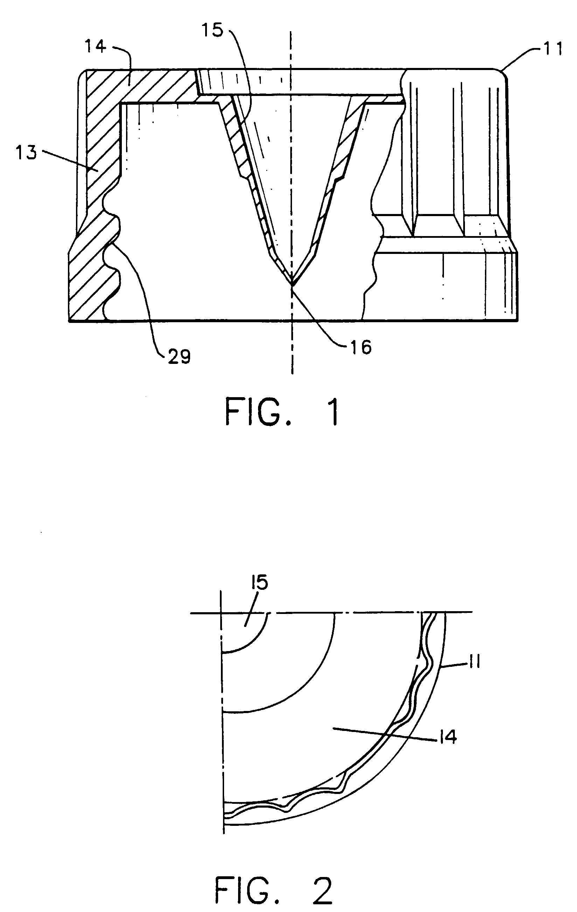

Eine erste Ausführungsform eines erfindungsgemässen Verschlusses 11 wird nachstehend anhand der Figuren 1 und 2 beschrieben. Der Verschluss 11 ist ein aus einem Kunststoff in einem Stück geformten Teil. Er hat eine zylindrische Seitenwand 13 und eine ringförmige, an der Seitenwand angrenzende obere Wand 14, die in eine kegelförmige Wand 15 übergeht, die sich vom inneren Kreis der oberen Wand nach innen erstreckt und in einer auf der Symmetrieachse der zylindrischen Wand liegenden Spitze 16 endet, die z.B. durch die Pipettiernadel einer automatischen Pipettiervorrichtung durchstechbar ist.

Der Verschluss 11 ist vorzugsweise ein Schraubverschluss, der in seiner Seitenwand 13 ein Innengewinde 29 hat, der einem Aussengewinde im Hals des (nicht gezeigten) Reagenzbehälters entspricht, der mit dem Verschluss verschlossen werden soll.

Die kegelförmige Wand 15 hat einen ersten an der oberen Wand 14 angrenzenden Teil, der mit der Symmetrieachse der zylindrischen Seitenwand 13 einen ersten Winkel bildet, der vorzugsweise ca. 10° beträgt, der aber zwischen 5° und 30° liegen kann.

Die kegelförmige Wand 15 hat einen zweiten Teil, der die Spitze 16 der kegelförmigen Wand bildet, und der mit der Symmetrieachse der zylindrischen Seitenwand 13 einen zweiten Winkel bildet, der grösser als der erste Winkel ist. Dieser zweite Winkel beträgt vorzugsweise 30°. Er kann aber zwischen 20° und 60° liegen.

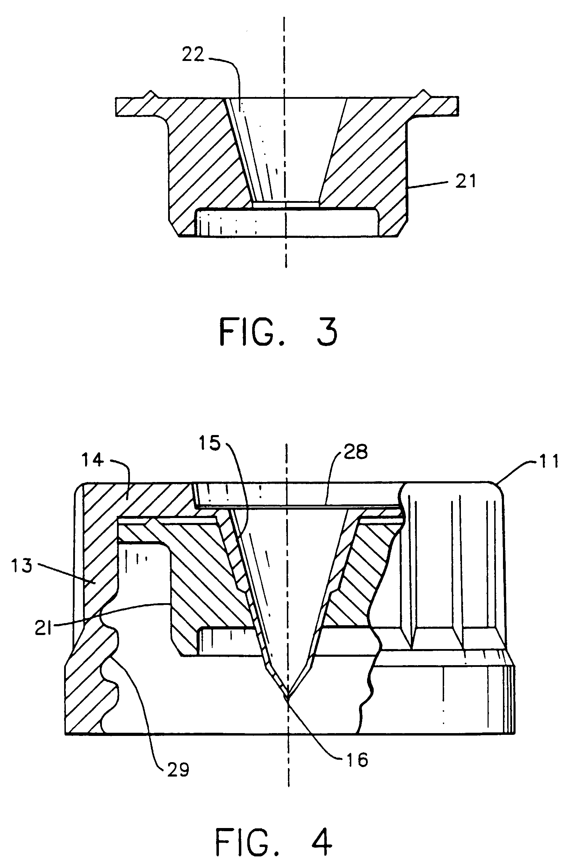

Der Zugang zur kegelförmigen Wand 15 ist vorzugsweise mit einer metallischen Siegelfolie 28 abgedichtet. Eine solche Ausführungsform ist in der Fig. 4 gezeigt.

Fig. 3 zeigt einen Querschnitt eines Stopfens 21, der geeignet ist, zusammen mit dem Verschluss 11 gemäss Fig. 1 eine erfindungsgemässe Verschliessvorrichtung gemäss Fig. 4 zu bilden, mit der eine besonders gute Abdichtung erzielbar ist.

Wie in Fig. 4 gezeigt, setzt sich diese Verschliessvorrichtung aus dem oben beschriebenen Verschluss 11 und aus dem Stopfen 21, der zwischen dem Verschluss 11 und dem Behälter als Abdichtung einsetzbar ist. Der Stopfen 21 hat in der Mitte einen Durchgang 22, dessen Form der Aussenfläche der kegelförmigen Wand 15 des Verschlusses so angepasst ist, dass wenn der Behälter mit dem Stopfen 21 und dem Verschluss 11 verschlossen wird, die Aussenfläche der kegelförmigen Wand 15 sich gegen die Innenwand des Durchgangs 22 des Stopfens 21 abdichtend anlegt.

Alle oben anhand der Fig. 1-4 beschriebenen Ausführungsbeispiele des Verschlusses 11 sind zum Aufbau der soeben beschriebenen Verschliessvorrichtung geeignet.

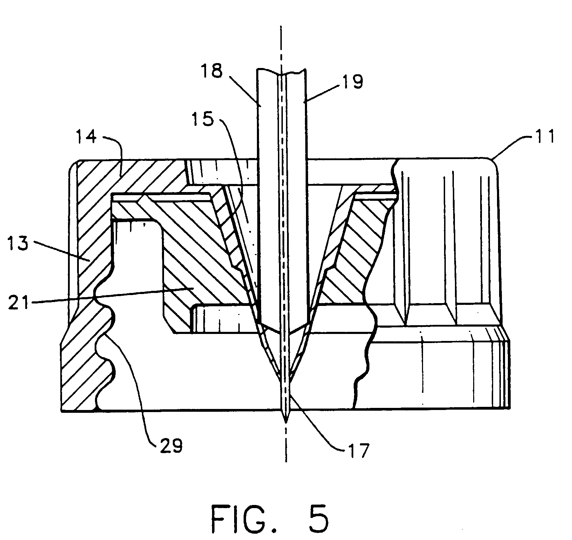

Die Benutzung des Verschlusses 11 wird nachstehend anhand der Figuren 5-8 beschrieben.

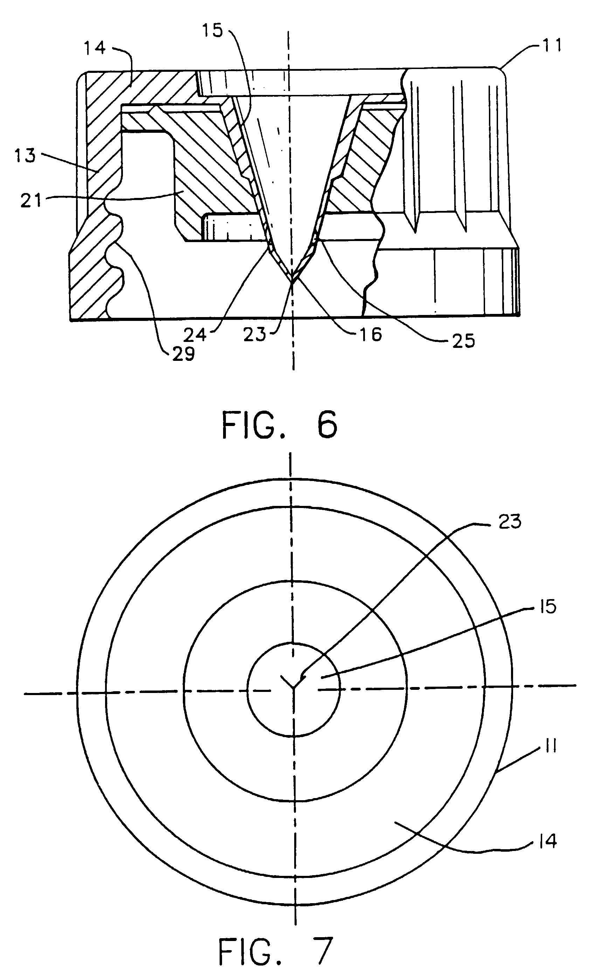

Die Spitze 16 der kegelförmigen Wand 15 in Fig. 1 wird mit der Spitze eines Dorns 17 durchgestochen, der Schneideflügel 18, 19 hat. Dabei schneiden die unteren scharfen Kanten der Schneideflügel 18, 19 Entlüftungsschlitze im unteren Teil der kegelförmige Wand 15. Nach Entfernung des Dorns 17 bleibt die kegelförmigen Wand 15 in dem in Figuren 6 und 7 gezeigten Zustand. An der durchgestochenen Spitze dieser Wand bleibt ein Y-förmiger Schlitz 23 und der untere Teil der Wand 15 hat nun Entlüftungsschlitze 24, 25.

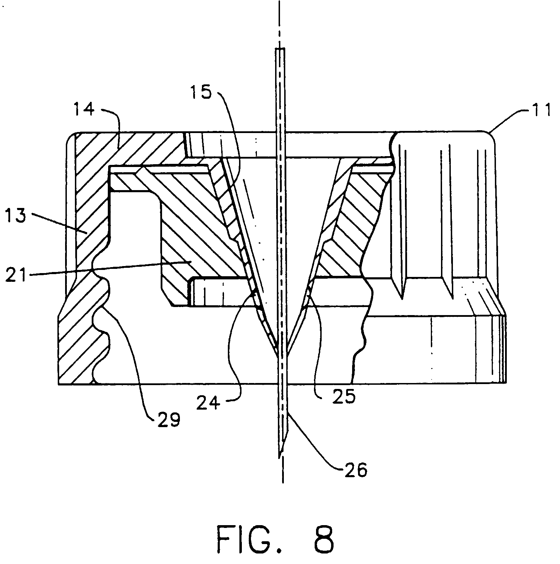

Wie in Fig. 8 gezeigt, kann nun eine Pipettiernadel durch den Y-förmigen Schlitz an der Spitze der kegelförmigen Wand 15 in den Reagenzbehälter eingeführt werden, z.B. um ein bestimmtes Volumen eines dort enthaltenen flüssigen Reagenz zu entnehmen.

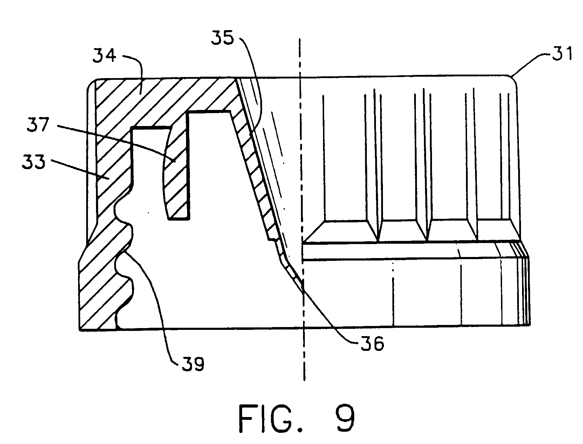

Die Fig. 9 zeigt eine weitere Ausführungsform eines erfindungsgemässen Verschlusses 31, der allein, d.h. ohne einen zusätztichen Stopfen wie der Stopfen 21 in Fig. 4, eine ausreichende Abdichtung für die Aufbewahrung eines Reagenz in einem Reagenzbehälter ermöglicht. Der Verschluss 31 ist ebenfalls ein aus einem Kunststoff in einem Stück geformten Teil. Er hat eine zylindrische Seitenwand 33 und eine ringförmige, an der Seitenwand angrenzende obere Wand 34, die in eine kegelförmige Wand 35 übergeht. Diese erstreckt sich vom inneren Kreis der oberen Wand 34 nach innen und endet in einer auf der Symmetrieachse der zylindrischen Wand 33 liegenden Spitze 36, die durchstechbar ist. Der Verschluss 31 hat ferner eine an der oberen Wand 34 angrenzende, ringförmige Dichtungslippe 37, die mit der Seitenwand 33 konzentrisch ist, sich nach innen erstreckt und zwischen der Seitenwand 33 und der kegelförmigen Wand 35 liegt. Diese Ausführungsform gemäss Fig. 9 eignet sich insbesondere zur Aufbewahrung eines flüssigen Reagenz, d.h. wenn der erforderliche Abdichtungsgrad nicht sehr hoch ist. Diese Ausführungsform gemäss Fig. 9 kann aber auch zur Aufbewahrung eines Reagenz in trockener Form (z.B. Granulat bzw. Lyophilisat) geeignet sein, wenn der erforderliche Abdichtungsgrad durch die Ausbildung des Verschlusses und insbesondere durch die Dicke seiner Wände sichergestellt wird.

Die oben anhand der Figuren 5-8 beschriebene Benutzung des Verschlusses 11 gilt auch für den Verschluss 31 gemäss Fig. 9.

Der Verschluss 11 bzw. 31 wird durch ein Spritzgussverfahren z.B. aus Polyethylen niederer Dichte (sogenanntes LD-PE, d.h. "low density polyethylene") hergestellt. Der Verschluss hat eine passende Farbe. Er ist z.B. weiss.

Der Stopfen 21 wird z.B. aus Brombutylkautschuk hergestellt.

Die Siegelfolie 28 ist z.B. eine Verbundfolie, d.h. eine geschichtete Struktur bestehend aus einer Schicht Polyethylenterephtalat (PETP) mit einer Dicke von 12 Mikrometer, einer Aluminiumschicht mit einer Dicke von 12 Mikrometer und einer Schicht Polyethylen (PE) mit einer Dicke von 100 Mikrometer.

## Patentansprüche

1. Verschluss (11) für einen Reagenzbehälter (12), der in einem Analysensystem verwendbar ist, das eine automatische Pipettiervorrichtung enthält, bei der zur Uebertragung von kleinen Reagenzmengen vom Reagenzbehälter zu Reaktionsküvetten eine Pipettiernadel verwendet wird, welcher Verschluss ein aus einem Kunststoff in einem Stück geformten Teil ist und folgende Teile aufweist:
eine äussere zylindrische Seitenwand (13), die eine Innenfläche, eine Aussenfläche und eine Symmetrieachse hat, die parallel zur Seitenwand verläuft, und
eine ringförmige, an der Seitenwand angrenzende obere Wand (14), die eine kreisförmige Oeffnung aufweist,
wobei der Verschluss eine innere kegelförmige Wand (15) enthält, die sich vom inneren Kreis der oberen Wand nach innen erstreckt und in einer auf der Symmetrieachse der zylindrischen Seitenwand liegenden Spitze (16) endet,
welcher Verschluss dadurch gekennzeichnet ist, dass die Spitze eine geschlossenen Spitze ist, die durchstechbar ist,
und dass die innere kegelförmige Wand (15) eine Aussenfläche und eine Innenfläche hat, und dass die Innenfläche von der Seitenwand beabstandet und an der obere Wand angrenzt,
wobei die Innenfläche der inneren kegelförmigen Wand (15) einen ersten, an der oberen Wand (14) angrenzenden Teil hat, der mit der Symmetrieachse der zylindrischen Seitenwand (13) einen ersten Winkel bildet, und einen zweiten Teil hat, der die Spitze (16) der kegelförmigen Wand bildet, und der mit der Symmetrieachse der zylindrischen Seitenwand (13) einen zweiten Winkel bildet, der grösser als der erste Winkel ist.

2. Verschluss gemäss Anspruch 1 dadurch gekennzeichnet, dass er ein Schraubverschluss ist.

3. Verschluss gemäss Anspruch 1, dadurch gekennzeichnet, dass der erste Winkel zwischen 5° und 30° liegt und der zweite Winkel zwischen 20° und 60° liegt.

4. Verschluss gemäss Anspruch 3, dadurch gekennzeichnet, dass der erste Winkel ca. 10° und der zweite Winkel ca. 30° beträgt.

5. Verschluss gemäss Anspruch 1, dadurch gekennzeichnet, dass der Zugang zur kegelförmigen Wand (15) mit einer metallischen Siegelfolie (28) abgedichtet ist.

6. Verschluss gemäss Anspruch 1, dadurch gekennzeichnet, dass er eine an der oberen Wand (34) angrenzende, ringförmige Dichtungslippe (37) hat, die mit der Seitenwand (33) konzentrisch ist, sich nach innen erstreckt und zwischen der Seitenwand (33) und der kegelförmigen Wand (35) liegt.

7. Verschluss gemäss Anspruch 1, dadurch gekennzeichnet, dass die kegelförmige Wand (15) eine glatte Innenfläche hat.

8. Verschliessvorrichtung für einen Reagenzbehälter, der in einem Analysensystem verwendbar ist, das eine automatische Pipettiervorrichtung enthält, bei der zur Uebertragung von kleinen Mengen vom Reagenzbehälter zu Reaktionsküvetten eine Pipettiernadel verwendet wird, welche Verschliessvorrichtung die folgende Komponenten enthält:
a) einen Verschluss (11), welcher ein aus einem Kunststoff in einem Stück geformten Teil ist, und folgende Teile aufweist: eine äussere zylindrische Seitenwand (13), die eine Innenfläche, eine Aussenfläche und eine Symmetrieachse hat, die parallel zur Seitenwand verläuft; eine ringförmige, an der Seitenwand angrenzende obere Wand (14), die und die eine kreisförmige Oeffnung aufweist; wobei der Verschluss ein aus einem Kunststoff in einem Stück geformten Teil ist,
eine innere kegelförmige Wand (15) enthält, die sich vom inneren Kreis der oberen Wand nach innen erstreckt und in einer auf der Symmetrieachse der zylindrischen Seitenwand liegenden Spitze (16) endet,
welcher Verschluss dadurch gekennzeichnet ist, dass die Spitze eine geschlossenen Spitze ist, die durchstechbar ist,
und dass die innere kegelförmige Wand (15) eine Aussenfläche und eine Innenfläche hat, und dass die Innenfläche von der Seitenwand beabstandet und an der obere Wand angrenzt, wobei die Innenfläche der inneren kegelförmigen Wand (15) einen ersten, an der oberen Wand (14) angrenzenden Teil hat, der mit der Symmetrieachse der zylindrischen Seitenwand (13) einen ersten Winkel bildet, und einen zweiten Teil hat, der die Spitze (16) der kegelförmigen Wand bildet, und der mit der Symmetrieachse der zylindrischen Seitenwand (13) einen zweiten Winkel bildet, der grösser als der erste Winkel ist, und
b) einen Stopfen (21), der zwischen dem Verschluss (11) und dem Behälter als Abdichtung einsetzbar ist und in der Mitte einen Durchgang (22) hat, dessen Form der Aussenfläche der kegelförmigen Wand (15) des Verschlusses so angepasst ist, dass wenn der Behälter mit dem Stopfen (21) und dem Verschluss (11) verschlossen wird, die Aussenfläche der kegelförmigen Wand (15) sich gegen die Innenwand des Durchgangs (22) des Stopfens (21) abdichtend anlegt.

9. Verschliessvorrichtung gemäss Anspruch 8, dadurch gekennzeichnet, dass der Verschluss (11) ein Schraubverschluss ist.

10. Verschliessvorrichtung gemäss Anspruch 8, dadurch gekennzeichnet, dass der erste Winkel zwischen 5° und 30° liegt und der zweite Winkel zwischen 20° und 60° liegt.

11. Verschliessvorrichtung gemäss Anspruch 10, dadurch gekennzeichnet, dass der erste Winkel ca. 10° und der zweite Winkel ca. 30° beträgt.

12. Verschliessvorrichtung gemäss Anspruch 8, dadurch gekennzeichnet, dass der Zugang zur kegelförmigen Wand (15) mit einer metallischen Siegelfolie abgedichtet ist.

13. Verschliessvorrichtung gemäss Anspruch 8, dass die kegelförmige Wand (15) des Verschlusses (11) eine glatte Innenfläche hat.

## Claims

1. A closure (11) for a reagent container (12), of use in an analysis system containing an automatic pipetting device, wherein a pipetting needle is used for transferring small quantities of reagent from the reagent container to reaction cells, said closure being a part moulded in one piece from a plastic and comprising the following parts:
an outer cylindrical side wall (13) having an inner surface, an outer surface and an axis of symmetry extending parallel to the side wall, and
an annular top wall (14) adjoining the side wall and having a circular opening,
the closure containing an inner conical wall (15) which extends inwardly from the inner circle of the top wall and terminates in a tip (16) lying on the axis of symmetry of the cylindrical side wall,
which closure is characterised in that the tip is a closed tip which is piercable,
and in that the inner conical wall (15) has an outer surface and an inner surface, and in that the inner surface is spaced from the side wall and adjoins the top wall,
the inner surface of the inner conical wall (15) having a first part adjoining the top wall (14) and, together with the axis of symmetry of the cylindrical side wall (13), forming a first angle, and having a second part which forms the tip (16) of the conical wall and which together with the axis of symmetry of the cylindrical side wall (13) forms a second angle larger than the first angle.

2. A closure according to claim 1, characterised in that it is a screw closure.

3. A closure according to claim 1, characterised in that the first angle is between 5° and 30° and the second angle between 20° and 60°.

4. A closure according to claim 3, characterised in that the first angle is about 10° and the second angle about 30°.

5. A closure according to claim 1, characterised in that the access to the conical wall (15) is sealed with a metal sealing foil (28).

6. A closure according to claim 1, characterised in that it has an annular sealing lip (37) which adjoins the top wall (34) and is concentric with the side wall (33), extends inwardly, and lies between the side wall (33) and the conical wall (35).

7. A closure according to claim 1, characterised in that the conical wall (15) has a smooth inner surface.

8. A closure device for a reagent container of use in an analysis system containing an automatic pipetting device, wherein a pipetting needle is used for transferring small quantities from the reagent container to reaction cells, which closure device contains the following components:
a) a closure (11) which is a part moulded in one piece from a plastic and comprises the following parts: an outer cylindrical side wall (13) having an inner surface, an outer surface and an axis of symmetry extending parallel to the side wall; an annular top wall (14) adjoining the side wall and having a circular opening; wherein the closure is a part moulded in one piece from a plastic and contains an inner conical wall (15) which extends inwardly from the inner circle of the top wall and terminates in a tip (16) lying on the axis of symmetry of the cylindrical side wall, which closure is characterised in that the tip is a closed tip which is piercable, and in that the inner conical wall (15) has an outer surface and an inner surface, and in that the inner surface is spaced from the side wall and adjoins the top wall, the inner surface of the inner conical wall (15) having a first part adjoining the top wall (14) and, together with the axis of symmetry of the cylindrical side wall (13), forming a first angle, and having a second part which forms the tip (16) of the conical wall and which together with the axis of symmetry of the cylindrical side wall (13) forms a second angle larger than the first angle, and
b) has a plug (21) which can be inserted between the closure (11) and the container to act as a seal and has in the middle a passage (22) the shape of which is so adapted to the outer surface of the conical wall (15) of the closure that when the container is closed with the plug (21) and the closure (11) the outer surface of the conical wall (15) bears sealingly against the inner wall of the passage (22) of the plug (21).

9. A closure device according to claim 8, characterised in that the closure (11) is a screw closure.

10. A closure device according to claim 8, characterised in that the first angle is between 5° and 30° and the second angle between 20° and 60°.

11. A closure device according to claim 10, characterised in that the first angle is about 10° and the second angle about 30°.

12. A closure device according to claim 8, characterised in that the access to the conical wall (15) is sealed with a metal sealing foil.

13. A closure device according to claim 8, characterised in that the conical wall (15) of the closure (11) has a smooth inner surface.

## Revendications

1. Fermeture (11) pour un récipient à réactif (12) utilisable dans un système d'analyse qui contient un dispositif automatique de pipettage, sur lequel on utilise une aiguille de pipettage pour la transmission de petites quantités de réactif du récipient à réactif vers les cuvettes de réaction, laquelle fermeture est une partie formée d'une seule pièce à partir d'un plastique et présente les parties suivantes : une paroi latérale (13) cylindrique extérieure qui a une surface intérieure, une surface extérieure et un axe de symétrie parallèle à la paroi latérale, et une paroi (14) supérieure de forme annulaire et adjacente à la paroi latérale, qui présente une ouverture circulaire, la fermeture contenant une paroi (15) de forme conique, intérieure, qui s'étend du cercle intérieur de la paroi supérieure vers l'intérieur et se termine par une pointe (16) située sur l'axe de symétrie de la paroi latérale cylindrique, laquelle fermeture est caractérisée en ce que la pointe est une pointe fermée qui peut être transpercée, et en ce que la paroi (15) intérieure de forme conique a une surface extérieure et une surface intérieure, et en ce que la surface intérieure est espacée de la paroi latérale et adjacente à la paroi supérieure, la surface intérieure de la paroi (15) intérieure de forme conique ayant une première partie adjacente à la paroi (14) supérieure qui forme un premier angle avec l'axe de symétrie de la paroi latérale (13) cylindrique et ayant une deuxième partie qui forme la pointe (16) de la paroi de forme conique, et qui forme un deuxième angle avec l'axe de symétrie de la paroi latérale (13) cylindrique qui est supérieure au premier angle.

2. Fermeture selon la revendication 1, caractérisée en ce qu'elle est une fermeture à vis.

3. Fermeture selon la revendication 1, caractérisée en ce que le premier angle se situe entre 5 et 30° et le deuxième angle entre 20 et 60°.

4. Fermeture selon la revendication 3, caractérisée en ce que le premier angle est environ 10° et le deuxième d'environ 30°.

5. Fermeture selon la revendication 1, caractérisée en ce que l'accès à la paroi (15) de forme conique est rendue étanche avec une feuille métallique (28) à sceller.

6. Fermeture selon la revendication 1, caractérisée en ce qu'elle a une lèvre d'étanchéité (37) de forme circulaire et adjacente à la paroi (34) supérieure, lèvre qui est concentrique par rapport à la paroi latérale (33), s'étend vers l'intérieur et se situe entre la paroi latérale (33) et la paroi (35) de forme conique.

7. Fermeture selon la revendication 1, caractérisée en ce que la paroi (15) de forme conique a une surface intérieure lisse.

8. Dispositif de fermeture pour un récipient à réactif utilisable dans un système d'analyse qui contient un dispositif automatique de pipettage, sur lequel on utilise une aiguille de pipettage pour la transmission de petites quantités du récipient à réactif vers les cuvettes de réaction lequel dispositif contient les composants suivants :
a) une fermeture (11) qui est une partie formée d'une seule pièce à partir d'un plastique et présente les parties suivantes : une paroi latérale (13) cylindrique extérieure, qui a une surface intérieure, une surface extérieure et un axe de symétrie parallèle à la paroi latérale ; une paroi (14) supérieure, de forme annulaire, adjacente à la paroi latérale, qui présente une ouverture de forme circulaire, la fermeture contenant une paroi (15) intérieure de forme conique qui s'étend du cercle intérieur de la paroi supérieure vers l'intérieur et se termine par une pointe (16) située sur l'axe de symétrie de la paroi latérale cylindrique, laquelle fermeture est caractérisée en ce que la pointe est une pointe fermée qui peut être transpercée, et en ce que la paroi (15) intérieure de forme conique a une surface extérieure et une surface intérieure, et en ce que la surface intérieure est espacée de la paroi latérale et est adjacente à la paroi supérieure, la fermeture étant une partie formée d'une seule pièce à partir d'un plastique, la surface intérieure de la paroi (15) intérieure de forme conique ayant une première partie adjacente à la paroi (14) supérieure, qui forme un premier angle avec l'axe de symétrie de la paroi latérale (13) cylindrique, et une deuxième partie qui forme la pointe (16) de la paroi conique, et qui forme avec l'axe de symétrie de la paroi latérale (13) cylindrique un deuxième angle qui est supérieur au premier angle, et
b) un bouchon (21) qui peut être inséré entre la fermeture (11) et le récipient comme moyen d'étanchéité et a au centre un passage (22) dont la forme est adaptée à la surface extérieure de la paroi (15) conique de la fermeture de telle façon que, si le récipient est fermé avec le bouchon (21) et la fermeture (11), la surface extérieure de la paroi (15) conique s'appuie de façon étanche contre la paroi interne du passage (22) du bouchon (21).

9. Dispositif de fermeture selon la revendication 8, caractérisé en ce que la fermeture (11) est une fermeture à vis.

10. Dispositif de fermeture selon la revendication 8, caractérisé en ce que le premier angle se situe entre 5° et 30° et le deuxième angle entre 20° et 60°.

11. Dispositif de fermeture selon la revendication 10, caractérisé en ce que le premier angle est d'environ 10° et le deuxième angle d'environ 30°.

12. Dispositif de fermeture selon la revendication 8, caractérisé en ce que l'accès à la paroi (15) conique est rendu étanche avec une feuille métallique à sceller.

13. Dispositif de fermeture selon la revendication 8, caractérisé en ce que la paroi (15) conique de la fermeture (11) a une surface interne lisse.
